# EUROPÄISCHE PATENTSCHRIFT

(11) **EP 0 640 542 B1**
(45) Veröffentlichungstag und Bekanntmachung des Hinweises auf die Patenterteilung: **27.11.1996**
(21) Anmeldenummer: 94103160.1
(22) Anmeldetag: 03.03.1994
(51) Int. Cl.: B65G 69/28

(54) **Federsystem für einen Niederhalte-Mechanismus für Überfahrbrücken**
Spring system for holddown mechanism for a dock board
Système à ressort pour mécanisme de retenue pour rampe de chargement

(30) Priorität: 25.08.1993 DE 9312362 U
(43) Veröffentlichungstag der Anmeldung: 01.03.1995
(73) Patentinhaber: VAN WIJK NEDERLAND B.V., NL-8243 PJ Lelystad (NL)
(72) Erfinder: Pereira das Dores, Antonio, NL-8224 HL Lelystad (NL)
(74) Vertreter: Beil, Hans Chr., Dr.

(56) Entgegenhaltungen:
- EP-A- 0 428 805
- DE-A- 2 103 017
- FR-A- 2 095 730

## Beschreibung

Die vorliegende Erfindung betrifft ein Federsystem für einen Niederhalte-Mechanismus für mechanische Überfahrbrücken.

Bei Überfahrbrücken liegt folgende Situation bezüglich des Be- und Entladevorganges vor:

Die an ihrem rampenseitigen Ende um eine waagrechte Achse schwenkbare Brückenplattform wird durch geeignete federunterstützte Antriebe in die höchste Lage bewegt. Dort klappt durch geeignete Vorrichtungen die Verlängerung aus, eine Bedienungsperson begibt sich auf die Plattform. Durch das zusätzliche Gewicht senkt sich diese auf die Ladefläche des zu be- bzw. entladenden Fahrzeuges. Ein Niederhalte-Mechanismus sorgt dafür, daß die Plattform stets den vertikalen Bewegungen des Fahrzeuges, die beim Ein- und Ausfahren mit Flurförderzeugen entstehen, folgt, und zwar sowohl nach oben als auch nach unten.

Bestehende Systeme arbeiten mit einer Zahnstange mit Verriegelung. Die Bewegung nach unten erfolgt widerstandslos. Hebt sich die Fahrzeugladefläche, so bewirkt eine eingebaute Feder, daß die Plattform ein Stück angehoben werden kann. Wird die Plattform zu weit angehoben, entriegelt eine Entriegelungskette die Verriegelung und die Zahnstange hebt sich jeweils um einen Zahn aus der Verriegelung. Nachteil des Zahnstangensystems ist der entstehende Lärm und das nicht kontinuierliche, sondern aufgrund der Verzahnung ruckartige Nachgeben beim Anheben der Plattform. Ferner ist die Herstellung dieser Systeme relativ aufwendig.

Aus der EP-A 0 428 805 ist ein derartiger Mechanismus bekannt, der auf der Basis von Öl und Gasdruck arbeitet. Dieser ist jedoch ebenfalls verhältnismäßig aufwendig herzustellen.

Das deutsche Gebrauchsmuster DE-GM 91 13 153 zeigt ein System, das mittels Reibungsschluß arbeitet.

Alle bisher bekannten Systeme haben jedoch einen Nachteil. Luftgefederte Lastkraftwagen und Anhänger mit zwei dicht nebeneinander liegenden Achsen verursachen beim Ladevorgang, daß die Überladebrücke sehr stark gehoben und gesenkt wird. Beim Anheben wird bei einem derart großen Höhenunterschied der Verriegelungsmechanismus entriegelt und die Plattform hebt sich. Dies passiert, wenn sich das zum Laden gebrauchte Flurförderzeug in Richtung Kabine des Lastkraftwagens bewegt. Fährt das Flurförderzeug wieder Richtung Rampe, kann es vorkommen, daß die Brückenplattform nicht mehr auf der Ladefläche "schwimmt". Diese Situation ist gefährlich und muß deshalb vermieden werden.

Ziel der Erfindung ist es daher, Niederhalte-Mechanismen derart zu verbessern, daß die oben genannten Gefahrensituationen nicht mehr auftreten können.

Dieses Ziel wird erfindungsgemäß dadurch erreicht, daß die bestehenden Federsysteme, die meistens auch den Niederhalte-Mechanismus entriegeln, durch ein Gasfedersystem ersetzt werden.

Dieses Federsystem besteht im wesentlichen aus einem Rohr, insbesondere einem Vierkantrohr (1) mit einer daran befestigten Deckplatte (2), welche eine Bohrung (3) aufweist und beidseitig im Rohr (1) rampenseitig nicht vollständig abschließt, so daß hier zwei Öffnungen (15) vorliegen. Hierdurch verlaufen parallel zum Rohr (1) zwei Flacheisen (4), die in Höhe des Widerlagers (62) Bohrungen (14) zur Befestigung am unteren Rahmen (55) und gegenüber hiervon am anderen Ende des Systems Bohrungen (6) zur Befestigung einer senkrecht zu ihnen verlaufenden Achse (7) aufweisen. Zwischen Achse (7) und Deckplatte (2) verläuft die Gasfeder mit Betätigungs Stange (12) und Kolben (9), wobei der Bewegungsbereich der Betätigungsstange (12) der Strecke (x) entspricht, um die die Gasfeder komprimiert bzw. auseinandergezogen wird. Die Dimension des Federsystems wird somit von dieser Strecke (x) im wesentlichen bestimmt.

Nachstehende Figuren erläutern eine Ausführungsform der Erfindung.

Fig. 1 zeigt einen schematischen Längsschnitt durch eine Überfahrbrücke zur Erläuterung der Gesamtsituation.

Fig. 2a, b, c zeigen, wie sich ein Anhänger beim Ladevorgang verhalten kann, wobei die obengenannten Gefahrensituationen auftreten können.

Fig. 3 und 4 zeigen Längsschnitte durch ein herkömmliches System gemäß Stand der Technik mit Druck- bzw. Schüsselfedern und zwangsmäßiger Entriegelung.

Fig. 5 und 6 zeigen Längsschnitte durch die Erfindung in unbeaufschlagtem Zustand.

Fig. 7 zeigt einen Längsschnitt durch die Erfindung in beaufschlagtem Zustand.

Fig. 8 zeigt die Erfindung im Schrägriß.

### Fig. 1

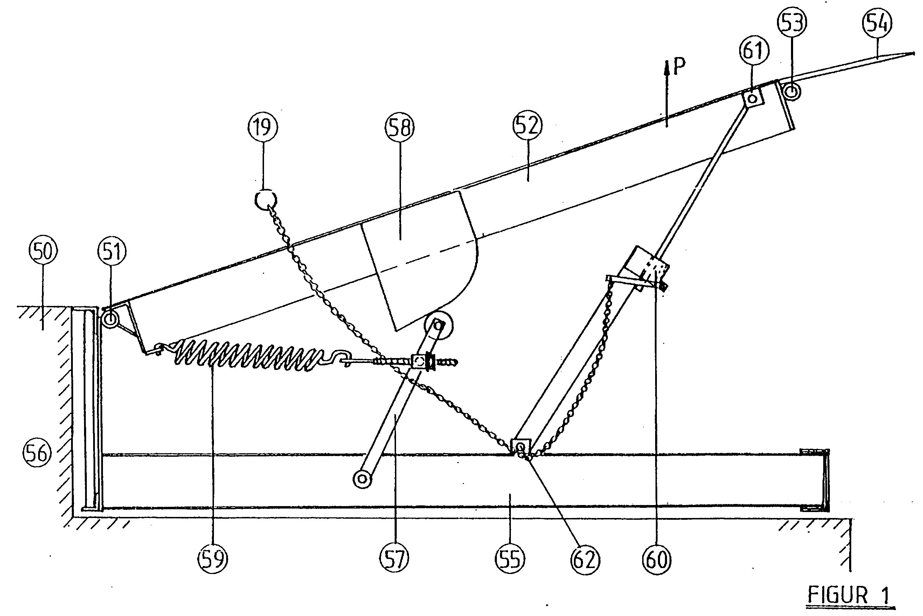

Fig. 1 zeigt den in Rampe (50) integrierten unteren Brückenrahmen (55) mit hinterem Rahmen (56). Die Brückenplattform (52) mit um Achse (53) drehbarer Verlängerung (54) ist in Achse (51) drehbar am hinteren Rahmen (56) gelagert. Ein Antriebsmechanismus, der z.B. aus Liftarm (57), Kamm (58) und Zugfeder (59) bestehen kann, sorgt stets für eine Aufwärtskraft (P) in der Plattform (52). Um eine gute Brückenfunktion zu gewährleisten, ist ein Niederhalte-Mechanismus (60) zwischen Widerlager (62) des unteren Rahmens (55) und Widerlager (61) der Plattform (52) befestigt. Dieser Mechanismus soll eine freie Bewegung der Plattform (52) nach unten zulassen, jedoch der durch den Antrieb aufgebrachten Kraft (P) nach oben standhalten, so daß ein selbständiges Anheben der Plattform (52) verhindert werden kann. Der Niederhalte-Mechanismus (60) sollte ferner mittels einer geeigneten Vorrichtung, z.B. einer Zugkette (19), entriegelt werden können. Dies ermöglicht es, die Plattform (52) von ihrer Ruhestellung in die Arbeitsstellung zu bringen. Die Aufwärtskraft (P) entspricht annähernd dem Eigengewicht der Bedienungsperson. Diese senkt durch Betreten der Plattform (52) selbige in Lade- bzw. Ruhestellung (letzteres mit eingeklappter Verlängerung (54)) ab.

Darüberhinaus soll der Niederhalte-Mechanismus ein ständiges Mitbewegen der Überladebrücke mit der Fahrzeugladefläche gewährleisten. Denn hebt sich die zu be- bzw. entladende Fahrzeugladefläche während des Ladevorganges bei aufliegender Verlängerung, so vergrößert sich die Aufwärtskraft (P). Um der Ladefläche nach oben zu folgen, muß also bei vergrößerter Aufwärtskraft (P) der Niederhalte-Mechanismus nachgeben. Nur so ist die sogenannte "Schwimmstellung" der Überladebrücke, also die kontinuierliche Bewegungskoinzidenz von Ladebrücke und Ladefläche, möglich.

### Fig. 2

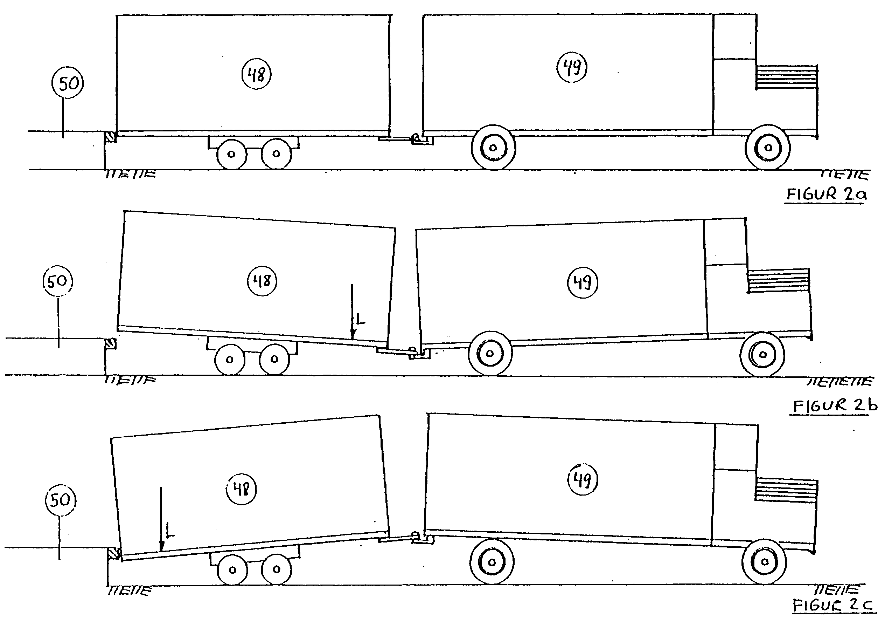

Fig. 2a zeigt den an der Rampe (50) geparkten Lastzug, bestehend aus Anhänger (48) und Zugfahrzeug (49).

Aus Fig. 2b ist ersichtlich, wie sich die Rückseite des Anhängers (48) hebt, wenn sich die Last (L) an der Seite des Zugfahrzeuges (49) befindet.

Ebenso zeigt Fig. 2c, wie sich die Rückseite des Anhängers (48) senkt, wenn sich die Last (L) an der der Rampe (50) zugewandten Seite befindet, was die obengenannte Gefahrensituation verursachen kann.

### Fig. 3 und 4

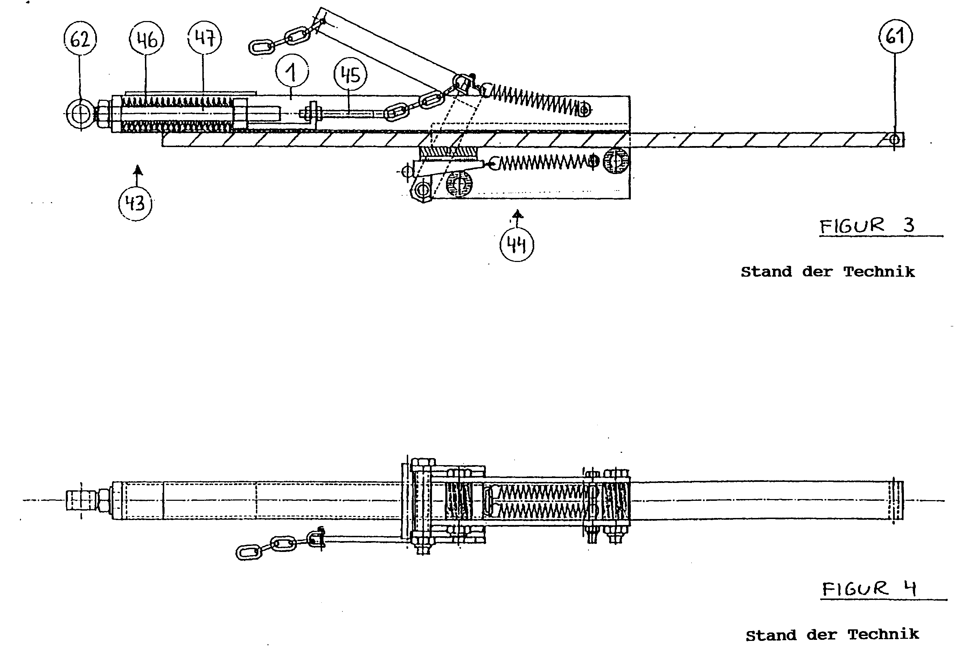

Fig. 3 und 4 zeigen einen herkömmlichen Niederhalte-Mechanismus nach dem Stand der Technik, wobei Teil (44) den eigentlichen Niederhalte-Mechanismus und Teil (43) das Federsystem mit einem an Stab (47) befestigten Widerlager (62) des unteren Rahmens (55) darstellt, das über Federn (46) verschiebbar in Rohr (1) gelagert ist und über die Kette (45) die Verriegelung des Niederhalte-Mechanismus (44) lösen kann.

### Fig. 5, 6, 7 und 8

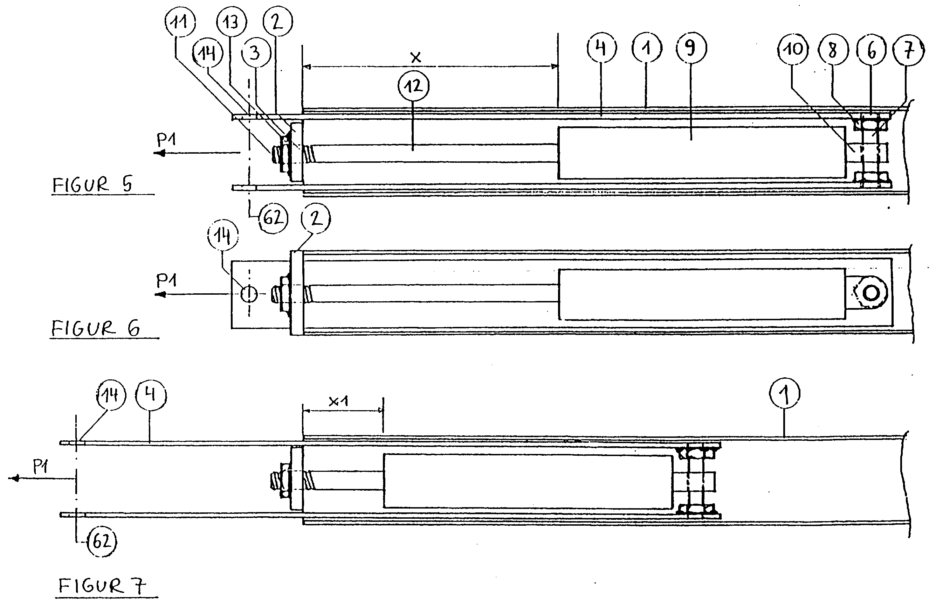

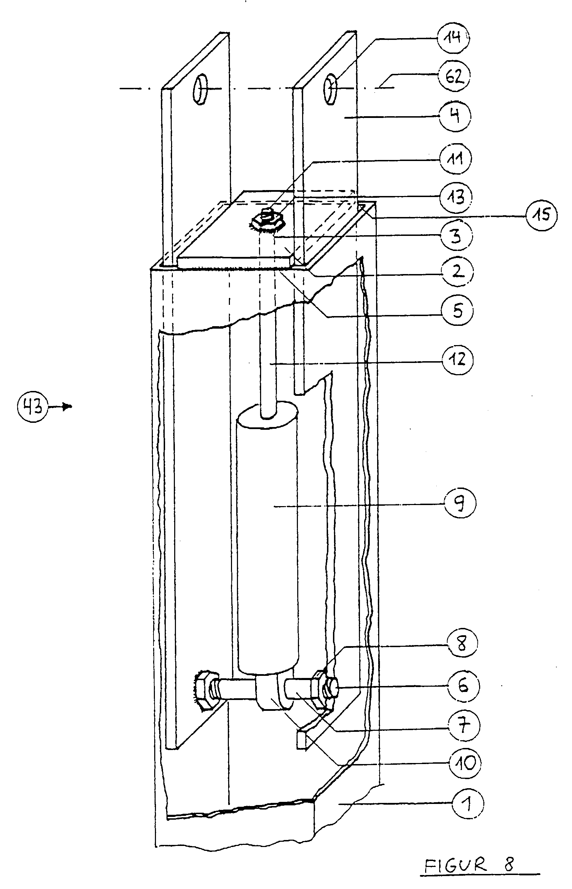

Erfindungsgemäß ist dieses Federsystem ein Gasfedersystem (43), welches in den Figuren 5, 6, 7 und 8 näher dargestellt ist. Dieses besteht aus einem Rohr (1), das an der dem Widerlager (62) des unteren Rahmens (55) zugewandten Seite mit einer Deckplatte (2) verschlossen ist, welche neben einer mittig angeordneten Bohrung (3) zwei längsseitig verlaufende vorzugsweise rechteckige Öffnungen (15) aufweist. Der Abschluß erfolgt dabei z.B. durch Schweißnähte (5). In den Öffnungen (15) befinden sich auf jeder Seite des Rohres (1) parallel dazu mit etwas Spielraum Flacheisen (4) mit Bohrungen (14) und (6). Die Bohrungen (14) dienen als Aufhängung am Widerlager (62) des unteren Rahmens (55). Durch die Bohrungen (6) am gegenüberliegenden Ende des Systems verläuft eine Achse (7) senkrecht dazu. Diese bildet eine Aufhängung (10) einer vorzugsweise als Druckfeder ausgebildeten Gasfeder (9), (12), die zwischen Achse (7) und Deckplatte (2) verläuft. Die Befestigung der Achse (7) am Flacheisen (4) kann über aufgeschweißte Schraubenmuttern (8) oder sonstige geeignete Vorrichtungen erfolgen. Die Stange (12) der Gasfeder (9) weist vorzugsweise ein Gewinde (11) auf. Auf Deckplatte (2) kann über die Bohrung (3) bevorzugt eine Schraubenmutter (13) aufgeschweißt sein, in der das Gewinde (11) der Stange (12) befestigt werden kann.

Wirkt nun eine Kraft P auf den Niederhalte-Mechanismus durch Anheben der Anhänger- bzw. Lastkraftwagenrückseite, so schieben sich die Flacheisen (4) aus Rohr (1) heraus, wobei die Gasfeder (9),(12) eingedrückt wird. Senkt sich die Anhänger- bzw. Lastkraftwagenrückseite wieder, zieht die Kraft der Gasfeder (9),(12) die Flacheisen (4) wieder zurück in Rohr (1).

Die Strecke (x) der Gasfeder (9),(12) sowie die Positionierung des Niederhalte-Mechanismus unter der Plattform (52) definieren den Höhenunterschied, den die Laderampe abdecken muß und der aufgrund des erfindungsgemäßen Federsystems gefahrlos überbrückt werden kann. Sie können den jeweiligen Gegebenheiten leicht angepaßt werden.

Auf diese Art wird preiswert und sicher eine wesentliche Gefahrenstelle bei den genannten Systemen beseitigt.

## Patentansprüche

1. Federsystem für einen Niederhalte-Mechanismus für Überfahrbrücken für Laderampen mit einer an ihrem rampenseitigen Ende um eine waagrechte Achse (51) verschwenkbaren Brückenplattform (52), die eine um Achse (53) drehbar gelagerte ein- und ausklappbare Verlängerung (54), einen hinteren Rahmen (56), einen unteren Rahmen (55) sowie einen eine Aufwärtskraft (P) erzeugenden Antriebsmechanismus zum Anheben der Brückenplattform (52) und einen zwischen Widerlager (62) des unteren Rahmens (55) und Widerlager (61) der Brückenplattform (52) wirkenden Niederhalte-Mechanismus (60) aufweist, welcher über ein Federsystem (43) mit dem Widerlager (62) des unteren Rahmens verbunden ist, wobei
dieses Federsystem (43)
1.1 ein Vierkantrohr (1) mit einer daran fest verbundenen Deckplatte (2) mit einer Bohrung (3) aufweist, wobei die Deckplatte (2) parallel zum Rohr (1) beidseitig nicht vollständig abschließt und somit zwei längsseitig verlaufende Öffnungen (15) aufweist,
1.2 zwei durch jede der Öffnungen (15) verlaufende Flacheisen (4) aufweist, welche in Höhe des Widerlagers (62) jeweils eine Bohrung (14) zur Befestigung am unteren Rahmen (55) aufweisen, und mit Rohr (1) an dem gegenüber vom Widerlager (62) des unteren Rahmens befindlichen Ende des Federsystems (43) über die Bohrungen (6) mit einer senkrecht zu den Flacheisen (4) verlaufenden Achse (7) fest verbunden sind, und
1.3 eine zwischen Bohrung (3) der Deckplatte (2) und der Achse (7) verlaufende Gasfeder (9) mit Betätigungsstange (12) aufweist, wobei der Bewegungsbereich der Betätigungsstange (12) der Strecke (x) entspricht, um die die Gasfeder (9),(12) komprimiert bzw. auseinandergezogen wird.

2. Federsystem gemäß Anspruch 1, wobei, Achse (7) an den Flacheisen (4) jeweils mit Muttern (8) befestigt ist.

3. Federsystem nach einem der Ansprüche 1 oder 2, wobei als Gasfeder (9),(12) eine Druckfeder verwendet wird.

4. Federsystem nach einem der Ansprüche 1 bis 3, wobei die Stange (12) der Gasfeder (9), (12) ein Gewinde (11) aufweist, mittels dem die Feder an der Deckplatte (2) mit einer dort aufgeschweißten Mutter (13) durch Bohrung (3) befestigt wird.

## Claims

1. Spring system for a holding-down mechanism for drive-over bridges for loading ramps having a bridge platform (52) which can be swivelled, at its end nearest the ramp, about a horizontal spindle (51) and has: an extension (54) that can be folded inwards and outwards and is mounted for rotation about a spindle (53); a rear frame (56); a lower frame (55) and also a drive mechanism for raising the bridge platform (52), which mechanism produces an upward force (P); and a holding-down mechanism (60) which acts between an abutment (62) on the lower frame (55) and an abutment (61) on the bridge platform (52) and is connected, via a spring system (43) to the abutment (62) on the lower frame, wherein the said spring system (43)
1.1 has a square tube (1) having a cover plate (2) which is fixedly connected thereto and has a bore (3), the cover plate (2) effecting closing-off incompletely on both sides, parallel to the tube (1) and thus having two openings (15) extending on the longitudinal sides,
1.2 has two flat iron bars (4) which extend through each of the openings (15) and have, at the level of the abutment (62), a bore (14), in each case, for attachment to the lower frame (55), and which are fixedly connected, by the tube (1) at that end of the spring system (43) which is located oppositely from the abutment (62) on the lower frame, to a spindle (7) extending perpendicularly to the flat iron bars (4), and
1.3 has a gas spring (9) having an actuating rod (12) and extending between the bore (3) in the cover plate (2) and the spindle (7), the range of movement of the actuating rod (12) corresponding to the span (x) by which the gas spring (9), (12) is compressed or extended.

2. Spring system according to claim 1, wherein the spindle (7) is fastened to the flat iron bars (4) by nuts (8) in each case.

3. Spring system according to one of claims 1 or 2, wherein a pressure spring is used as the gas spring (9), (12).

4. Spring system according to one of claims 1 to 3, wherein the rod (12) of the gas spring (9), (12) has a thread (11) by means of which the spring is attached to the cover plate (2) through the bore (3) with a nut (13) which is welded on at that point.

## Revendications

1. Système à ressort pour un mécanisme presseur pour ponts de liaison pour quais de chargement, comprenant une plate-forme (52) de pont de liaison qui peut pivoter autour d'un axe horizontal (51) à son extrémité côté quai et qui présente une rallonge (54) montée rotative autour d'un axe (53) pour se rétracter et se mettre en extension, un châssis arrière (56), un châssis inférieur (55) ainsi qu'un mécanisme d'entraînement développant une force élévatrice (P), qui sert à élever la plate-forme (52) du pont de liaison et un mécanisme presseur (60) qui agit entre une butée (62) du châssis inférieur (55) et une butée (61) de la plate-forme (52) du pont de liaison, ce mécanisme étant relié à la butée (62) du châssis inférieur par l'intermédiaire d'un système à ressort (43), ce système à ressort (43) comprenant :
1.1 un tube carré (1) muni d'une plaque de fermeture (2) fixée rigidement à ce tube et présentant un perçage (3), la plaque de fermeture (4) ne se fermant pas entièrement parallèlement au tube (1) sur deux côtés et présentant ainsi deux ouvertures (15) s'étendant longitudinalement,
1.2 deux fers plats (4) qui passent respectivement à travers les ouvertures (15) et qui présentent chacun, à la hauteur de la butée (62), un perçage (14) destiné à la fixation au châssis inférieur (55), et qui, avec le tube (1), à l'extrémité du système à ressort (43) qui se trouve à l'opposé de la butée (62) du châssis inférieur, sont reliés rigidement par les perçages (6) à un axe (7) qui s'étend perpendiculairement aux fers plats (4), et
1.3 un ressort à gaz (9) s'étendant entre le perçage (3) de la plaque de fermeture (2) et l'axe (7), et une tige d'actionnement (12), la région de déplacement de la tige d'actionnement (12) correspondant à la course (x) dont le ressort à gaz (9), (12) est comprimé ou mis en extension.

2. Système à ressort selon la revendication 1, dans lequel l'axe (7) est fixé aux fers plats (4) par des écrous (8).

3. Système à ressort selon une des revendications 1 et 2, dans lequel on utilise en tant que ressort à gaz (9), (12), un ressort de compression.

4. Système à ressort selon une des revendications 1 à 3, dans lequel la tige (12) du ressort à gaz (9), (12) présente un filetage (11) au moyen duquel le ressort est fixé à la plaque de fermeture (2) qui présente un écrou (13) vissé sur cette plaque, à travers le perçage (3).
